# EUROPEAN PATENT APPLICATION

(11) **EP 4 203 457 A1**
(43) Date of publication of application: **28.06.2023**
(21) Application number: 21866413.4
(22) Date of filing: 30.07.2021
(51) Int. Cl.: H04N 5/232, H04N 5/262, H04N 5/66

(54) **IMAGE CAPTURING DEVICE, IMAGE CAPTURING SYSTEM, AND IMAGE CAPTURING DEVICE SETTING METHOD**

(30) Priority: 08.09.2020 JP 2020150480
(71) Applicant: Sony Group Corporation, Minato-Ku, Tokyo, 108-0075 (JP)
(72) Inventor: NAGAO, Kenichiro, Tokyo 108-0075 (JP); ISHIHARA, Tetsuji, Tokyo 108-0075 (JP)
(74) Representative: D Young & Co LLP
(86) International application number: PCT/JP2021/028308
(87) International publication number: WO 2022/054453

(57) **Abstract**

Provided are an imaging apparatus capable of setting a telop display area, an imaging system, and a setting method of an imaging apparatus.

The present technology provides an imaging apparatus including a telop display area setting unit that sets a telop display area that is an area in which a telop is superimposed and displayed on a captured image, provides an imaging system including a telop display area setting unit that sets a telop display area that is an area in which a telop is superimposed and displayed on a captured image, and provides a setting method of an imaging apparatus including setting a telop display area that is an area in which a telop is superimposed and displayed on a captured image.

## Description

### TECHNICAL FIELD

The present technology relates to an imaging apparatus, an imaging system, and a setting method of an imaging apparatus.

### BACKGROUND ART

Conventionally, a technology of arranging a plurality of images in a plurality of areas of a display unit has been used.

For example, Patent Document 1 discloses "A camera comprising an imaging unit and a display unit, the camera including an image selection mode using a template in which a plurality of images is arranged in a plurality of areas of the display unit, wherein the camera further comprises a display control unit that, in an imaging mode using the template, displays an image from the imaging unit in an area different from an area of the template before an image from the imaging unit is captured in an area selected from the plurality of areas".

### CITATION LIST

### PATENT DOCUMENT

Patent Document 1: Japanese Patent Application Laid-Open No. 2014-030263

### SUMMARY OF THE INVENTION

### PROBLEMS TO BE SOLVED BY THE INVENTION

Meanwhile, for example, in television broadcasting, moving image distribution services, and the like, a technology of superimposing and displaying a telop or the like on a video displayed on a screen is used. However, Patent Document 1 does not include any description regarding setting of a telop display area in which a telop is displayed in an imaging apparatus.

Against this background, a main object of the present technology is to provide an imaging apparatus capable of setting the telop display area, an imaging system, and a setting method of an imaging apparatus.

### SOLUTIONS TO PROBLEMS

The present technology provides an imaging apparatus including a telop display area setting unit that sets a telop display area that is an area in which a telop is superimposed and displayed on a captured image.

The telop display area setting unit may set a display position of the telop display area.

The telop display area setting unit may set a size of the telop display area.

The telop display area setting unit may set a color of the telop display area.

The telop display area setting unit may set display transmittance of the telop display area.

The telop display area setting unit may set a shape of the telop display area.

The telop display area setting unit may set identification information for identifying the telop.

The telop display area setting unit may set setting information regarding the telop display area such that the user cannot change the setting information.

The telop display area setting unit may set a range changeable by a user in setting information regarding the telop display area.

The telop display area setting unit may set a plurality of the telop display areas.

The telop display area setting unit may set an attribute of a product for which the imaging apparatus is used.

A display control unit may further be included, and the display control unit may perform display control such that the telop display area is superimposed on the captured image.

The display control unit may change the display position of the telop display area according to the size of a display screen included in the imaging apparatus.

The display control unit may change the size of the telop display area according to the size of a display screen included in the imaging apparatus.

An operation unit that accepts an operation of a user may further be included, and the telop display area setting unit may set the telop display area on the basis of operation information obtained from the operation unit.

The operation unit may include a touch panel that accepts a touch operation of the user.

The operation unit may include a physical button that accepts a button pressing operation of the user.

Furthermore, the present technology provides an imaging system including a telop display area setting unit that sets a telop display area that is an area in which a telop is superimposed and displayed on a captured image.

Furthermore, the present technology provides a setting method of an imaging apparatus, the method including setting a telop display area that is an area in which a telop is superimposed and displayed on a captured image.

### BRIEF DESCRIPTION OF DRAWINGS

Fig. 1 is a block diagram illustrating a configuration of an imaging apparatus 100 according to an embodiment of the present technology.
Fig. 2 is a diagram illustrating an example of a screen displayed on a display unit 1 according to the embodiment of the present technology.
Fig. 3 is a diagram illustrating an example of a screen displayed on the display unit 1 according to the embodiment of the present technology.
Fig. 4 is a diagram illustrating an example of a screen displayed on the display unit 1 according to the embodiment of the present technology.
Fig. 5 is an example of a table retaining information regarding a telop display area according to the embodiment of the present technology.
Fig. 6 is a flowchart illustrating an example of processing of the imaging apparatus 100 according to the embodiment of the present technology.
Fig. 7 is a flowchart illustrating an example of processing of the imaging apparatus 100 according to the embodiment of the present technology.
Fig. 8 is a flowchart illustrating an example of processing of the imaging apparatus 100 according to the embodiment of the present technology.
Fig. 9 is a flowchart illustrating an example of processing of the imaging apparatus 100 according to the embodiment of the present technology.
Fig. 10 is a flowchart illustrating an example of a procedure when a user produces a product using the imaging apparatus 100 according to the embodiment of the present technology.
Fig. 11 is a top view illustrating an example of a physical button 8 included in an operation unit 10 according to an embodiment of the present technology.
Fig. 12 is a diagram illustrating an example of a screen displayed on the display unit 1 according to the embodiment of the present technology.
Fig. 13 is an example of a table retaining information regarding a telop display area according to an embodiment of the present technology.
Fig. 14 is a block diagram illustrating a configuration of an imaging apparatus 100 according to an embodiment of the present technology.
Fig. 15 is a block diagram illustrating a configuration of an imaging system 1000 according to an embodiment of the present technology.
Fig. 16 is a flowchart illustrating an example of processing of a setting method according to an embodiment of the present technology.

### MODE FOR CARRYING OUT THE INVENTION

Hereinafter, a preferred embodiment for carrying out the present technology will be described with reference to the drawings. Note that the embodiment described below is an example of a representative embodiment of the present technology. The scope of the present technology is not limited to the embodiment, and various combinations, modifications, and changes can be made within the scope of the gist of the present technology. Furthermore, in the drawings, the same or equivalent elements or members are denoted by the same reference numerals, and redundant description is omitted.

In the drawings, unless otherwise specified, "upper" means an upper direction or an upper side in the drawings, "lower" means a lower direction or a lower side in the drawings, "left" means a left direction or a left side in the drawings, and "right" means a right direction or a right side in the drawings.

The present technology will be described in the following order.
1. First embodiment of present technology (Example 1 of imaging apparatus)
   (1) Outline of present embodiment
   (2) Display unit
   (3) Telop display area setting unit
   (4) Flowchart
      (4-1) At time of activation
      (4-2) At the time of imaging
      (4-3) At time of setting change
      (4-4) At time of on/off switching
      (4-5) Production procedure
2. Second embodiment of present technology (Example 2 of imaging apparatus)
3. Third embodiment of present technology (Example 3 of imaging apparatus)
4. Fourth embodiment of present technology (Example 4 of imaging apparatus)
5. Fifth embodiment of present technology (Example 5 of imaging apparatus)
6. Sixth embodiment of present technology (imaging system)
7. Seventh embodiment of present technology

### (setting method of imaging apparatus)

### [1. First embodiment of present technology (Example 1 of imaging apparatus)]

### [(1) Outline of present embodiment]

An imaging apparatus according to an embodiment of the present technology is an imaging apparatus for business use or consumer use used for production of a product to be broadcasted or distributed in, for example, television broadcasting, a moving image distribution service, or the like. Examples of the product include a program, a movie, and a teaching material.

Conventionally, in production of a product, a technology of superimposing and displaying a telop on a video displayed on a screen has been used. A telop is information such as characters, symbols, or images related to a product. Examples of a telop include emergency information of an earthquake or an alarm, a flash report of an election result or a news, an advertisement, a time, a broadcast station name, a comment of a program performer, a situation explanation, an interview conversation, lyrics provided in a music program, a logo, a face image, and the like.

This telop is generally superimposed and displayed on a video during or after imaging. Therefore, there is a problem that, for example, a telop is superimposed and displayed on an important person, character, or the like included in the video, so that the important person, character, or the like is hidden and cannot be seen.

In order to prevent this problem, a camera operator who is performing imaging needs to perform imaging while picturing the area where the telop is superimposed and displayed in his/her mind. Therefore, there is also a problem that a skilled technology is required for imaging.

In view of the foregoing, a main object of the present technology is to provide an imaging apparatus capable of setting a telop display area in which a telop is displayed. As a result, since the camera operator can recognize the telop display area during shooting, it is possible to prevent an important person, image, or the like from being covered and hidden by the telop. Furthermore, since the camera operator does not need to picture the area where the telop is superimposed and displayed in his/her mind, it is easy for him/her to capture an image.

Effects similar to the above can be obtained in other embodiments described later. Accordingly, in other embodiments described later, redundant description will be omitted.

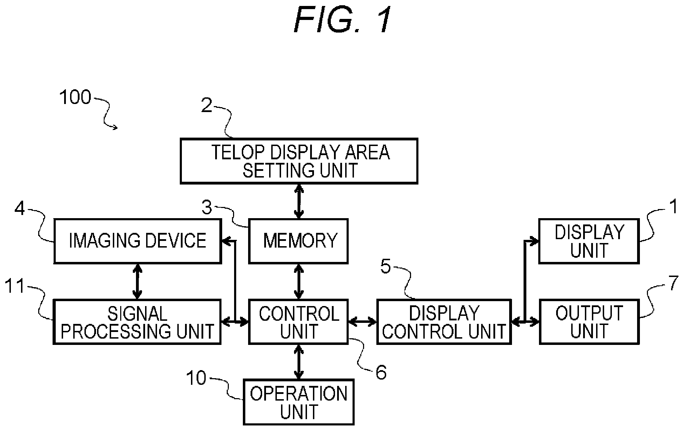

An imaging apparatus according to an embodiment of the present technology will be described with reference to Fig. 1. Fig. 1 is a block diagram illustrating a configuration of an imaging apparatus 100 according to the embodiment of the present technology.

As illustrated in Fig. 1, the imaging apparatus 100 can include, for example, a display unit 1, a telop display area setting unit 2, a memory 3, an imaging device 4, a signal processing unit 11, a display control unit 5, a control unit 6, an output unit 7, and the like.

The display unit 1 displays a captured image. A captured image is an image displayed on the display unit 1, and is an image that the camera operator checks during imaging. The display unit 1 may be, for example, a finder such as a live view monitor or an electronic viewfinder. Alternatively, the display unit 1 may be a display included in, for example, a display device, a television receiver, a smartphone terminal, a tablet terminal, a mobile phone terminal, a personal digital assistant (PDA), a personal computer (PC), a server, a portable music player, a portable game machine, or a wearable terminal (HMD: head mounted display, glasses-type HMD, watch-type terminal, band-type terminal, and the like).

The telop display area setting unit 2 can be implemented by using, for example, a nonvolatile memory. The telop display area setting unit 2 sets a telop display area. The telop display area setting unit 2 will be described in detail later.

The memory 3 can be implemented by using, for example, a random access memory (RAM) or the like. The memory 3 obtains information regarding a telop display area set in the telop display area setting unit 2 and temporarily stores the information.

The imaging device 4 obtains image data. The imaging device 4 can be implemented by using, for example, an image sensor or the like. The imaging device 4 is, for example, a charge coupled device (CCD) type or a complementary metal-oxide semiconductor (CMOS) type, and may include a sensing element in which a plurality of pixels is two-dimensionally arranged. As a result, the imaging device 4 performs exposure control for light from a subject incident via a lens or the like. Furthermore, the imaging device 4 may include a processing unit that performs, for example, correlated double sampling (CDS) processing, automatic gain control (AGC) processing, analog/digital (A/D) conversion processing, or the like, for an electric signal photoelectrically converted by a pixel. As a result, the imaging device outputs the captured image signal as digital data to the signal processing unit 11, the control unit 6, and the like.

The signal processing unit 11 may include, for example, a microprocessor specialized in digital signal processing such as a digital signal processor (DSP), a microcomputer, or the like. The signal processing unit 11 includes units for performing various types of signal processing on the digital signal (captured image signal) transmitted from the imaging device 4. Specifically, the signal processing unit 11 performs processing such as correction processing among R, G, and B color channels, white balance correction, aberration correction, and shading correction. Furthermore, the signal processing unit 11 performs YC generation processing of generating (separating) a luminance (Y) signal and a color (C) signal from the image data of R, G, and B, processing of adjusting luminance and color, processing such as knee correction and gamma correction, and the like.

The signal processing unit 11 performs conversion into a final output format by performing resolution conversion processing, codec processing of performing coding for recording or communication, and the like. The image data converted into the final output format is stored in the memory 3, for example. Furthermore, by outputting the image data to the display unit 1, the captured image is displayed.

The display control unit 5 can be implemented by using, for example, a circuit, a program, or the like having an on-screen display (OSD) function. The display control unit 5 performs display control such that a telop display area set by the telop display area setting unit 2 is superimposed on a captured image included in image data obtained by the imaging device 4.

The captured image on which the telop display area is superimposed can be displayed on the display unit 1, for example. Alternatively, the captured image on which the telop display area is superimposed can be displayed on an electronic device other than the imaging apparatus 100 via the output unit 7. The electronic device may be, for example, a display device or a computer device. The output unit 7 can be implemented by using, for example, an HDMI (registered trademark) terminal or an SDI terminal.

The control unit 6 can be implemented by using, for example, a microcomputer or the like. The control unit 6 controls processing of components such as the display control unit 5. For example, the control unit 6 instructs the display control unit 5 to perform display control on the basis of information regarding a telop display area stored in the memory 3.

Note that although not illustrated, the imaging apparatus 100 may include, as other components, a storage unit for storing image data, a lens, a lens drive unit for driving the lens, and the like.

Moreover, the control unit 6 may control a lens or the like included in the imaging apparatus 100. The control unit 6 can instruct the lens drive unit included in the imaging apparatus 100 on the basis of the captured image and the information regarding the telop display area. As a result, the imaging apparatus 100 can automatically change the zoom magnification, the angle of view, and the like in order to prevent a person, a character, and the like included in the captured image from being covered and hidden behind the telop display area.

### [(2) Display unit]

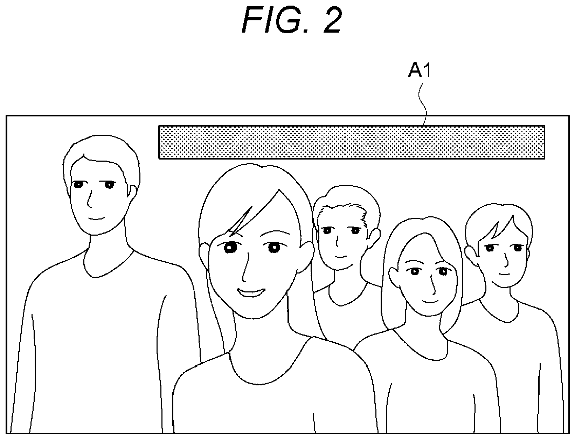

The display unit 1 will be described with reference to Fig. 2. Fig. 2 is a diagram illustrating an example of a screen displayed on the display unit 1 according to the present embodiment. As illustrated in Fig. 2, a telop display area is superimposed and displayed on a captured image. By performing imaging while viewing the display unit 1, the user can perform imaging while checking the telop display area.

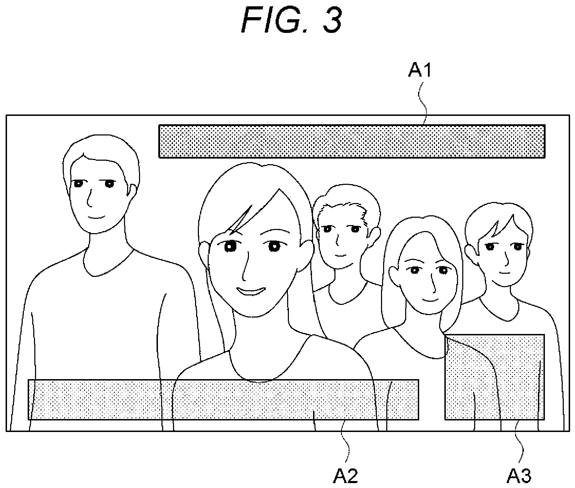

Moreover, the display unit 1 may display a plurality of telop display areas. This will be described with reference to Fig. 3. Fig. 3 is a diagram illustrating an example of a screen displayed on the display unit 1 according to the present embodiment. As illustrated in Fig. 3, the display unit 1 can superimpose and display a plurality of telop display areas A1 to A3 on a captured image. Note that the number of telop display areas is not particularly limited.

The telop display area can be changed by a user operation. Specifically, for example, the display position, size, color, display transmittance, shape, and/or identification information of the telop display area can be changed by a user operation.

In order to achieve this, as illustrated in Fig. 1, the imaging apparatus 100 may further include an operation unit 10 that accepts a user operation. The telop display area setting unit 2 sets the telop display area on the basis of operation information obtained from the operation unit 10.

The operation unit 10 can be implemented by including, for example, a keyboard, a mouse, a trackball, a tablet, a touch pad, a stick type pointing device, a touch panel, a joystick, and the like. In the following description, an example in which the operation unit 10 has a touch panel will be used. The touch panel accepts a user's touch operation. In the touch panel, the display unit 1 and the operation unit 10 are integrated.

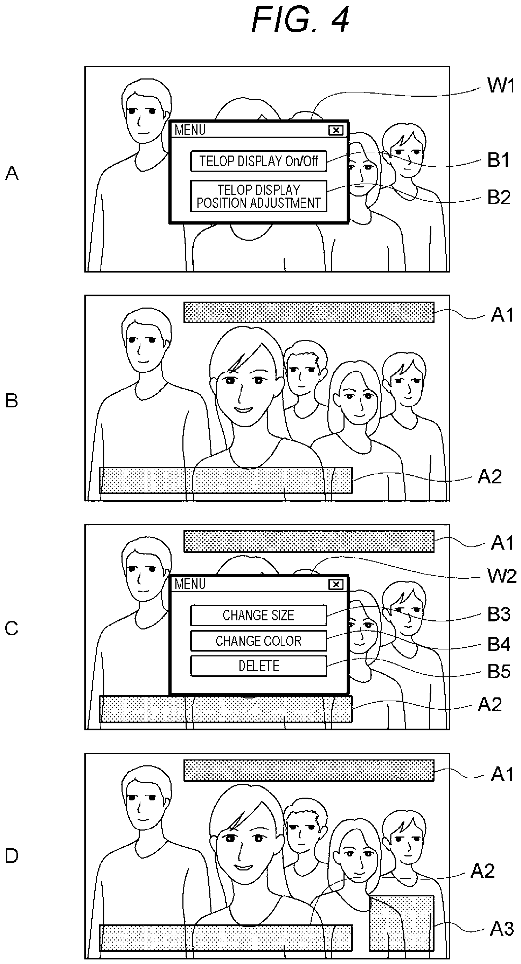

The operation of the touch panel will be described with reference to Fig. 4. Fig. 4 is a diagram illustrating an example of a screen displayed on the display unit 1 according to the present embodiment.

For example, when a menu button or the like included in the imaging apparatus 100 is pressed, a first menu window W1 is displayed on the screen displayed on the display unit 1 as illustrated in Fig. 4A. In the first menu window W1, for example, a "telop display on/off" button B1 and a "telop display position adjustment" button B2 are arranged. Note that the buttons displayed in the first menu window W1 are not limited thereto.

When the "telop display on/off" button B1 is selected by a touch operation or the like, the telop display areas A1 and A2 are displayed on or are eliminated from the display screen. More specifically, when the "telop display on/off" button B1 is selected while the telop display area is displayed, the telop display area is eliminated. When the "telop display on/off" button B1 is selected while the telop display area is not displayed, the telop display area is displayed.

For example, when determining the composition of a captured image, the user can select the "telop display on/off" button B1 so that the telop display areas A1 and A2 are eliminated. As a result, the captured image is not partially covered and hidden by a telop display area, so that the composition of the captured image can be determined easily. Thereafter, by selecting the "telop display on/off" button B1, the user can perform imaging while displaying the telop display areas A1 and A2.

When the "telop display position adjustment" button B2 is selected, display positions of the telop display areas A1 and A2 become changeable. If the display position is always changeable, the display position may be changed by the user unintentionally touching the operation unit 10. Therefore, it is preferable that whether or not to change the display position can be set.

When the display position becomes changeable, the screen transitions to a display screen illustrated in Fig. 4B. On this display screen, the user can change the display position by dragging the telop display areas A1 and A2 by a touch operation or the like.

Moreover, when the user touches the telop display areas A1 and A2 for several seconds, for example, the display screen transitions to a display screen illustrated in Fig. 4C. As shown in this display screen, a second menu window W2 is displayed on the display screen. In the second menu window W2, for example, a "change size" button B3, a "change color" button B4, and a "delete" button B5 are arranged. Note that the buttons displayed in the second menu window W2 are not limited thereto.

When the "change size" button B3 is selected, the size of the telop display areas A1 and A2 become changeable. When the "change color" button B4 is selected, the color of the telop display areas A1 and A2 become changeable. When the "delete" button B5 is selected, the telop display areas A1 and A2 become deletable.

Furthermore, in the display screen illustrated in Fig. 4B, when the user touches a lower right part for several seconds, for example, the display screen transitions to a display screen illustrated in Fig. 4D. As shown in this display screen, a new telop display area A3 is displayed.

### [(3) Telop display area setting unit]

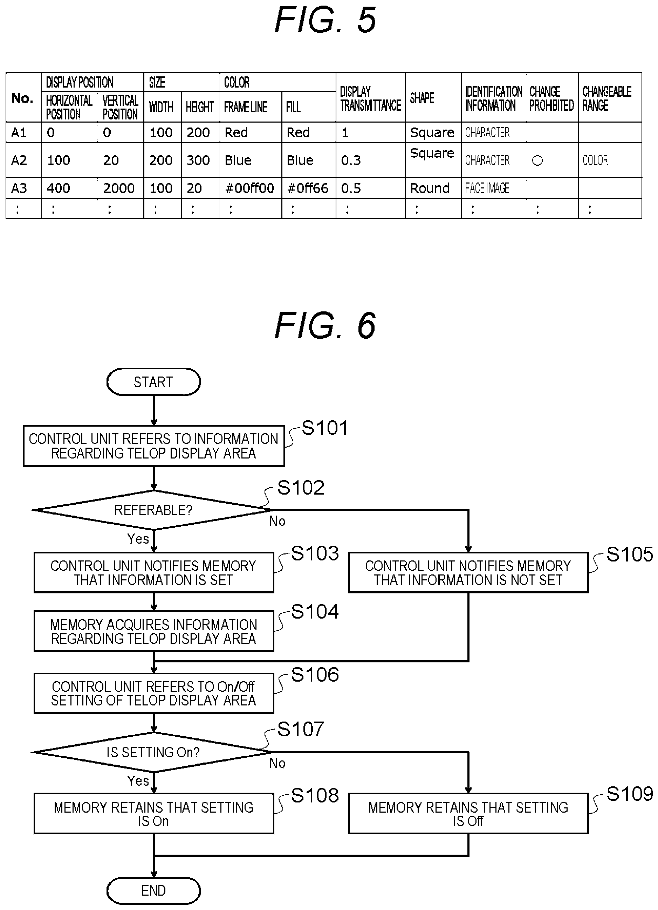

The telop display area setting unit 2 sets a telop display area by retaining information regarding a telop display area. Information regarding a telop display area will be described with reference to Fig. 5. Fig. 5 is an example of a table retaining information regarding a telop display area according to the present embodiment. This table may be recorded in, for example, an extensible markup language (XML) format or the like. This table can be recorded together with image data.

As illustrated in Fig. 5, the telop display area setting unit 2 can set the display position of a telop display area. More specifically, the telop display area setting unit 2 can set a specific position in the telop display area by, for example, coordinates. In the example illustrated in Fig. 5, the display position is set by the coordinate of the X axis which is the horizontal direction of the display screen and the coordinate of the Y axis which is the vertical direction of the display screen. This coordinate may be, for example, a vertex in the telop display area or the center of the telop display area.

When the telop display area setting unit 2 sets the display position of the telop display area, the user can set the display position of the telop display area according to the display position of the superimposed and displayed telop via the operation unit 10.

Moreover, the telop display area setting unit 2 can set the size of a telop display area. More specifically, the telop display area setting unit 2 can set the size of a telop display area by, for example, a width, a height, an area, and the like. In the example illustrated in Fig. 5, the size is set by the width and the height. The width and the height or the area may be expressed by, for example, the metric system or may be expressed by pixels.

When the telop display area setting unit 2 sets the size of the telop display area, the user can set the size of the telop display area according to the size of the superimposed and displayed telop via the operation unit 10.

Moreover, the telop display area setting unit 2 can set the color of a telop display area. More specifically, the telop display area setting unit 2 can set the color of a frame line and/or a filled area, for example, in a telop display area. This color can be represented by, for example, a color name. For example, when the color of a telop display area is red, the telop display area setting unit 2 can set this color as "Red".

Alternatively, this color may be represented by, for example, RGB values or CMYK values. The RGB values or the CMYK values can express each of hue, lightness, and saturation of a color. The RGB values include an R value, a G value, and a B value. The R value indicates the degree of red. The G value indicates the degree of green. The B value indicates the degree of blue. The CMYK values include a C value, an M value, a Y value, and a K value. The C value indicates the degree of cyan. The M value indicates the degree of magenta. The Y value indicates the degree of yellow. The K value indicates the degree of black. In the example illustrated in Fig. 5, green is indicated by a hexadecimal RGB value of "#00ff00".

When the telop display area setting unit 2 sets the color of the telop display area, the user can freely set the color of the telop display area via the operation unit 10. For example, the user can set black outdoors during the day, white at night, and the like so that the visibility of the telop display area becomes high. Since a captured image when captured outdoors during the day tends to be bright and close to white, a black telop display area has high visibility. Since a captured image when captured at night tends to be dark and close to black, a white telop display area has high visibility.

Moreover, a meaning may be associated to the color. For example, red and characters may be associated, and green and a face image may be associated. As a result, the user can see that character information is superimposed and displayed in the red telop display area, and a face image is superimposed and displayed in the green telop display area. For example, when characters are superimposed and displayed as a telop on characters included in a video, characters are superimposed and displayed on characters, and thus there is a problem that visibility of the characters is lowered. Similarly, for example, when a face image is superimposed and displayed as a telop on a face image included in a video, a face image is superimposed and displayed on a face image, and thus there is a problem that visibility of the face image is lowered. These problems can be prevented by setting the color of the telop display area by the telop display area setting unit 2.

Moreover, the telop display area setting unit 2 can set the display transmittance of a telop display area. The display transmittance indicates a degree to which the captured image of the background can be seen through. The telop display area setting unit 2 can set the display transmittance in percentage, for example. When the display transmittance is 0, the telop display area becomes completely transparent and is not displayed, and when the display transmittance is 1, the telop display area becomes completely opaque and the captured image of the background cannot be seen. When the display transmittance is 0.5, the telop display area becomes translucent.

When the telop display area setting unit 2 sets the display transmittance of the telop display area, the user can freely set the display transmittance of the telop display area via the operation unit 10. As a result, since the captured image of the background of the telop display area can be seen through the telop display area, the user can perform imaging while simultaneously checking the telop display area and the captured image. As a result, imaging becomes easy.

Moreover, the telop display area setting unit 2 can set the shape of a telop display area. This shape can be represented by, for example, a name of the shape. For example, when the shape of a telop display area is a rectangle, the telop display area setting unit 2 can set this shape as "Square".

The shape may be, for example, a rectangle, a circle, an ellipse, a polygon, a silhouette, or the like. Examples of a rectangle include a square, a rectangle, a square with rounded corners, and a rectangle with rounded corners.

The telop display area setting unit 2 may set information regarding a frame line of the shape of a telop display area. For example, the telop display area setting unit 2 may set information including the type of a frame line such as whether the frame line is a solid line or a broken line, and the thickness of the frame line.

When the telop display area setting unit 2 sets the shape of the telop display area, the user can set the shape of the telop display area according to the shape of the superimposed and displayed telop via the operation unit 10. Alternatively, when the shape is a silhouette of a person, the user can recognize that an image of a person is superimposed and displayed as a telop.

Moreover, the telop display area setting unit 2 can set identification information for identifying a telop. For example, when the telop to be superimposed and displayed is characters, the telop display area setting unit 2 can set this identification information as "character". For example, when the telop to be superimposed and displayed is a face image, the telop display area setting unit 2 can set this identification information as "face image". In addition, for example, "time", "broadcast station name", "host", and the like may be set in the identification information.

When the telop display area setting unit 2 sets the identification information of the telop display area, the user can set the identification information of the telop display area according to the superimposed and displayed telop via the operation unit 10.

For example, when characters are superimposed and displayed as a telop on characters included in a video, characters are superimposed and displayed on characters, and thus there is a problem that visibility of the characters is lowered. Similarly, for example, when a face image is superimposed and displayed as a telop on a face image included in a video, a face image is superimposed and displayed on a face image, and thus there is a problem that visibility of the face image is lowered. These problems can be prevented by setting the identification information of the telop display area by the telop display area setting unit 2.

Alternatively, the identification information may be used for association when a telop is superimposed and displayed. For example, when a telop is superimposed at the time of editing a product, the telop can be superimposed on a captured image on the basis of the identification information.

Moreover, the telop display area setting unit 2 can set setting information regarding a telop display area so that the user cannot change the setting information. In the example shown in Fig. 5, in an item "change prohibited", setting information regarding a telop display area is set so that the user cannot change the setting information. In the telop display area A2 marked with a circle in this item, the setting information cannot be changed by the user.

With such setting by the telop display area setting unit 2, the user is prevented from changing the setting information regarding the telop display area via the operation unit 10. As a result, for example, the display position of a time, a broadcast station name, or the like is fixed, and the appearance of a product is made more uniform.

Furthermore, the telop display area setting unit 2 can set a range changeable by the user in the setting information regarding the telop display area. The changeable range includes the display position, size, color, display transmittance, shape, identification information, and the like of the telop display area described above. In the example illustrated in Fig. 5, in an item "changeable range", "color" is set as the range that can be changed by the user.

As a result, for example, a telop display area can be set such that the display position is not changeable but the color is changeable. More specifically, for example, the telop display area setting unit 2 may set a range in which RGB values of colors can be set.

Alternatively, for example, the telop display area setting unit 2 may set a range changeable by the user on the display screen. For example, when the display position of a telop display area is included in an upper half of the display screen, the telop display area setting unit 2 can set the setting information regarding the telop display area so that the user cannot change the setting information.

With such setting by the telop display area setting unit 2, the user is prevented from changing the setting information regarding a part of the telop display area via the operation unit 10. As a result, for example, the display position of a time, a broadcast station name, or the like is fixed, and the appearance of a product is made more uniform.

Moreover, the telop display area setting unit 2 can set a plurality of telop display areas. The telop display area setting unit 2 can set the above-described display position, size, color, display transmittance, shape, identification information, and the like for each of the plurality of telop display areas.

When the telop display area setting unit 2 sets a plurality of telop display areas, the user can freely set the plurality of telop display areas via the operation unit 10. As a result, a plurality of telops can be superimposed and displayed on a captured image.

Note that a program for implementing the display control unit 5 and the like may be stored in another computer device or computer system different from the imaging apparatus 100. In this case, the imaging apparatus 100 can use a cloud service that provides functions of the program. Examples of the cloud service include software as a service (SaaS), infrastructure as a service (IaaS), and platform as a service (PaaS).

Moreover, the program can be stored using various types of non-transitory computer readable media and supplied to the computer. Non-transitory computer readable media include various types of tangible storage media. Examples of non-transitory computer readable media include magnetic recording media (e.g., flexible disk, magnetic tape, or hard disk drive), solid state drive, magneto-optical recording media (e.g., magneto-optical disk), compact disc read only memory (CD-ROM), CD-R, CD-R/W, and semiconductor memory (e.g., mask ROM, programmable ROM (PROM), erasable PROM (EPROM), flash ROM, or random access memory (RAM)). Furthermore, the program may be supplied to the computer by various types of transitory computer readable media. Examples of transitory computer readable media include electrical signals, optical signals, and electromagnetic waves. The transitory computer readable medium can supply the program to the computer via a wired communication path such as an electric wire and an optical fiber, or a wireless communication path.

### [(4) Flowchart]

### [(4-1) At time of activation]

Processing at the time of activation of the imaging apparatus 100 will be described with reference to Fig. 6. Fig. 6 is a flowchart illustrating an example of processing of the imaging apparatus 100 according to the embodiment of the present technology.

As illustrated in Fig. 6, first, in step S101, the control unit 6 refers to information regarding a telop display area set in the telop display area setting unit 2.

If this information is referable (step S102: Yes), in step S103, the control unit 6 notifies the memory 3 that information regarding a telop display area is set. In step S104, the memory 3 acquires the information regarding the telop display area set in the telop display area setting unit 2.

On the other hand, if the information regarding the telop display area is not referable (step S102: No), in step S105, the control unit 6 notifies the memory 3 that information regarding a telop display area is not set.

Next, in step S106, the control unit 6 refers to on/off setting of the telop display area set in the telop display area setting unit 2.

If this setting is on (step S107: Yes), in step S108, the memory 3 retains that the on/off setting of the telop display area is on.

On the other hand, if this setting is off (step S107: No), in step S109, the memory 3 retains that the on/off setting of the telop display area is off.

### [(4-2) At time of imaging]

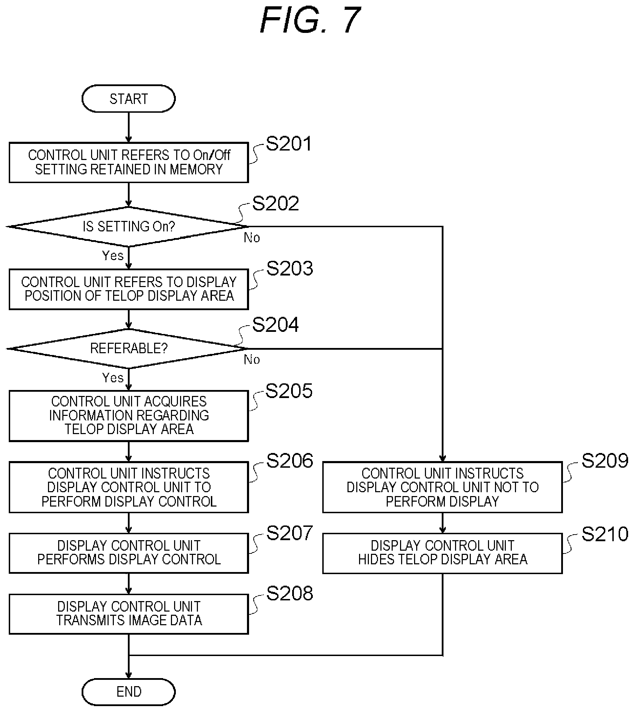

Processing at the time of imaging by the imaging apparatus 100 will be described with reference to Fig. 7. Fig. 7 is a flowchart illustrating an example of processing of the imaging apparatus 100 according to the embodiment of the present technology.

As illustrated in Fig. 7, first, in step S201, the control unit 6 refers to on/off setting of the telop display area held in the memory 3.

If this setting is on (step S202: Yes), in step S203, control unit 6 refers to information regarding the display position of the telop display area held in the memory 3.

If this information is referable (step S204: Yes), in step 205, the control unit 6 acquires information regarding the telop display area from the memory 3. Then, in step 206, the control unit 6 instructs the display control unit 5 to perform display control on the basis of this information.

In step S207, the display control unit 5 performs display control such that the telop display area is superimposed on the captured image.

Finally, in step S208, the display control unit 5 transmits image data including the captured image to the display unit 1, the output unit 7, or the like.

On the other hand, if the on/off setting of the telop display area held in the memory 3 is off (step S202: No), or when information regarding the display position of the telop display area held in the memory 3 is not held in the memory 3 (step S204: No), in step S209, the control unit 6 instructs the display control unit 5 not to display the telop display area. Finally, in step S210, the display control unit 5 hides the telop display area.

### [(4-3) At time of setting change]

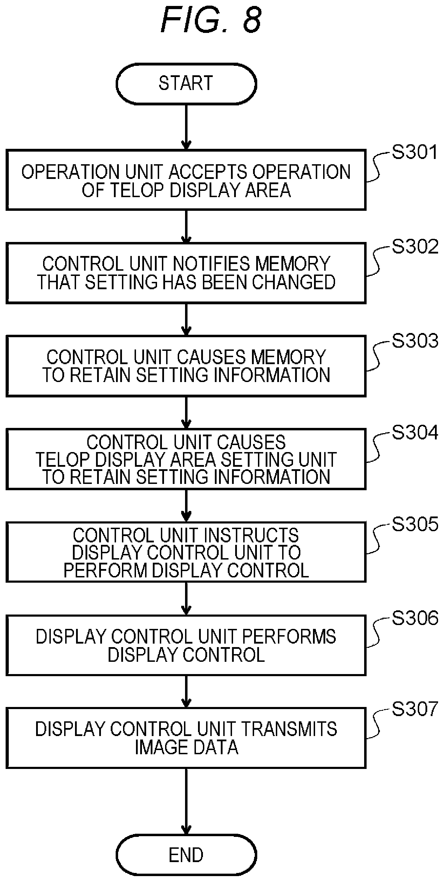

Processing at the time of setting change of information regarding a telop display area will be described with reference to Fig. 8. Fig. 8 is a flowchart illustrating an example of processing of the imaging apparatus 100 according to the embodiment of the present technology.

As illustrated in Fig. 8, first, in step S301, the operation unit 10 accepts an operation of a telop display area.

Next, in step S302, the control unit 6 notifies the memory 3 that the setting of information regarding the telop display area has been changed by a user operation.

Next, in step S303, the control unit 6 causes the memory 3 to retain the information regarding the telop display area.

Next, in step S304, the control unit 6 causes the telop display area setting unit 2 to retain the information regarding the telop display area.

Next, in step S305, the control unit 6 instructs the display control unit 5 to perform display control on the basis of the information regarding the telop display area.

Next, in step S306, the display control unit 5 performs display control such that the telop display area is superimposed on the captured image.

Finally, in step S307, the display control unit 5 transmits image data including the captured image to the display unit 1, the output unit 7, or the like.

### [(4-4) At time of on/off switching]

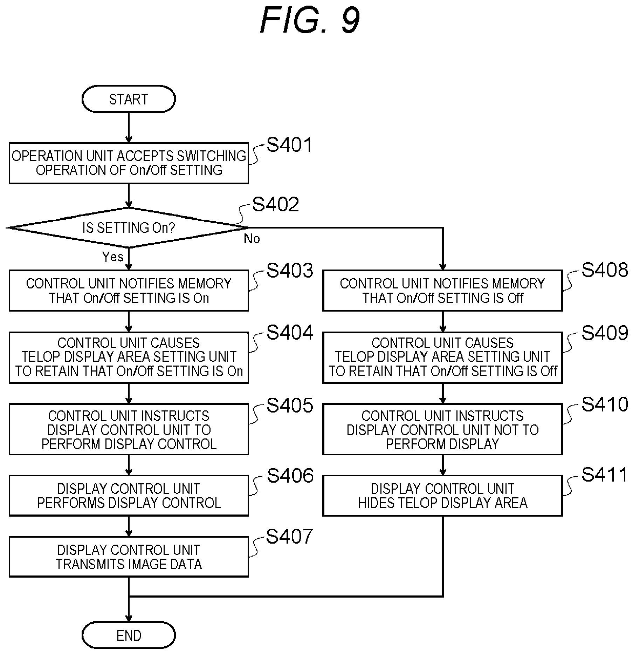

Processing at the time of on/off switching of a telop display area will be described with reference to Fig. 9. Fig. 9 is a flowchart illustrating an example of processing of the imaging apparatus 100 according to the embodiment of the present technology.

As illustrated in Fig. 9, first, in step S401, the operation unit 10 accepts a switching operation of on/off setting of a telop display area.

If the on/off setting of the telop display area is on (step S402: Yes), in step S403, the control unit 6 notifies the memory 3 that the on/off setting of the telop display area is on.

Next, in step S404, the control unit 6 causes the telop display area setting unit 2 to retain that the on/off setting of the telop display area is on.

Next, in step S405, the control unit 6 instructs the display control unit 5 to perform display control on the basis of the information regarding the telop display area.

Next, in step S406, the display control unit 5 performs display control such that the telop display area is superimposed on the captured image.

Finally, in step S407, the display control unit 5 transmits image data including the captured image to the display unit 1, the output unit 7, or the like.

On the other hand, if the on/off setting of the telop display area is off (step S402: No), in step S408, the control unit 6 notifies the memory 3 that the on/off setting of the telop display area is off.

Next, in step S409, the control unit 6 causes the telop display area setting unit 2 to retain that the on/off setting of the telop display area is off.

Next, in step S410, the control unit 6 instructs the display control unit 5 not to display the telop display area.

Finally, in step S411, the display control unit 5 hides the telop display area.

### [(4-5) Production procedure]

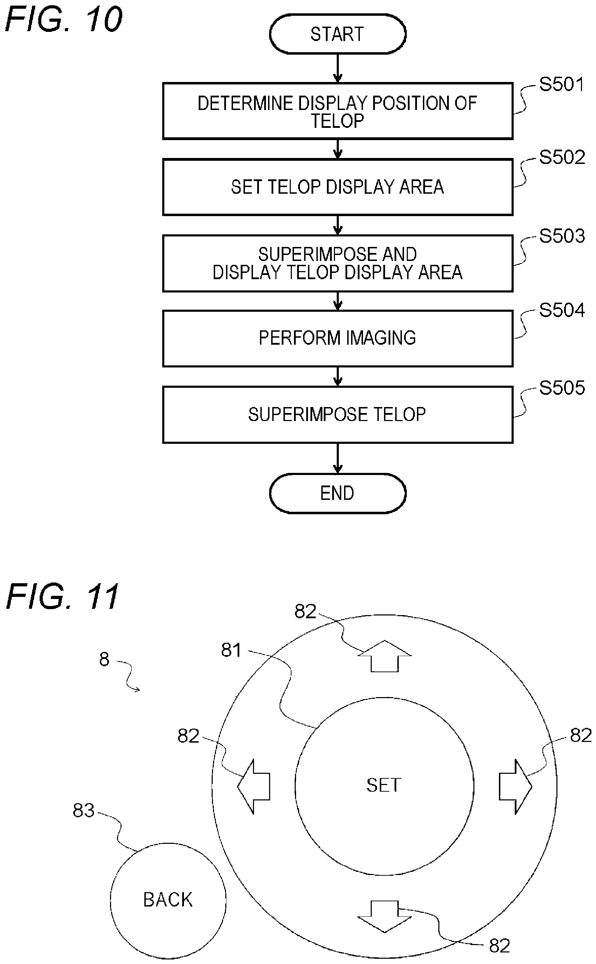

A procedure when the user produces a product using the imaging apparatus 100 will be described with reference to Fig. 10. Fig. 10 is a flowchart illustrating an example of a procedure when the user produces a product using the imaging apparatus 100 according to the embodiment of the present technology.

As illustrated in Fig. 10, first, in step S501, the user determines the display position of a telop on the display screen. At this time, the imaging apparatus 100 is not necessarily used.

Next, in step S502, the user sets a telop display area in the telop display area setting unit 2 using the imaging apparatus 100.

Next, in step S503, the user superimposes and displays the telop display area on a captured image using the imaging apparatus 100.

Next, in step S504, the user uses the imaging apparatus 100 to perform imaging such that the telop display area is not superimposed on the subject.

Finally, in step S505, when editing the product, the user superimposes a telop on the captured image. By reading the table illustrated in Fig. 5, the user can recognize the position where the telop is to be superimposed. Note that the imaging apparatus 100 is not necessarily used in step S505.

Note that the telop may be superimposed at the time of editing after imaging, or may be superimposed in real time during imaging. Accordingly, in step S505, the user may superimpose the telop on the captured image during imaging, for example, in live broadcasting or the like, instead of at the time of editing of the product.

### [2. Second embodiment of present technology (Example 2 of imaging apparatus)]

An operation unit 10 may include a physical button that accepts a button pressing operation of the user. This will be described with reference to Fig. 11. Fig. 11 is a top view illustrating an example of a physical button 8 included in the operation unit 10 according to an embodiment of the present technology.

As illustrated in Fig. 11, in the physical button 8 according to the present embodiment, arrow buttons 82 are arranged on the upper, lower, left, and right sides of the outer periphery of a SET button 81 with the SET button 81 as the center. A BACK button 83 is disposed at the lower left of the SET button 81. These physical buttons 8 can be arranged in the vicinity of a display screen of a display unit 1.

When the arrow button 82 is pressed, a telop display area moves in the direction of the arrow. When the SET button 81 is pressed, for example, the display position of the telop display area is determined. When the BACK button 83 is pressed, for example, the state of the display screen transitions to the previous state.

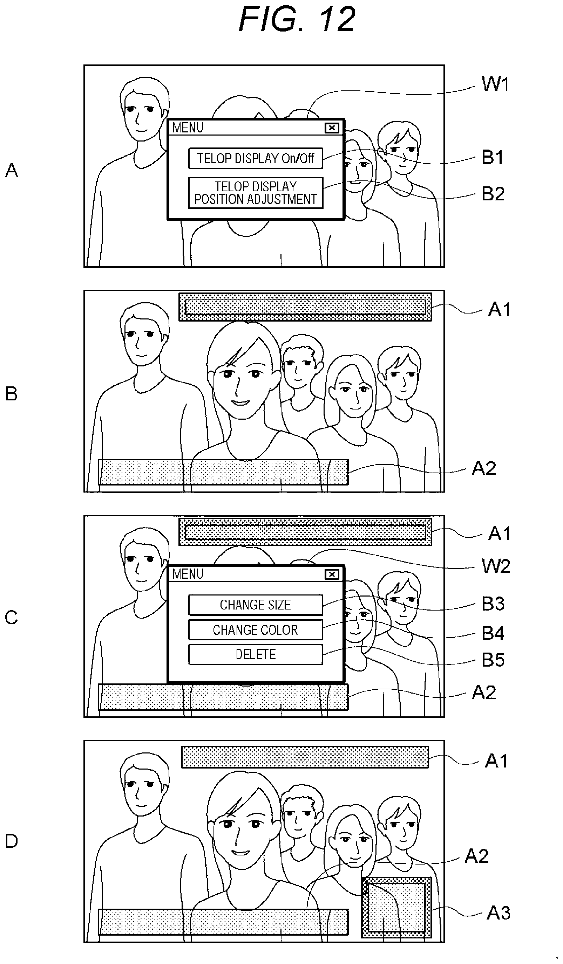

The operation of the physical button 8 will be described with reference to Fig. 12. Fig. 12 is a diagram illustrating an example of a screen displayed on the display unit 1 according to the present embodiment. Note that description of contents similar to those in Fig. 4 will be omitted.

For example, when the SET button 81 is pressed, as illustrated in Fig. 12A, a first menu window W1 is displayed on the display screen.

When a "telop display on/off" button is selected by pressing the arrow button 82 and the SET button 81, telop display areas A1 and A2 are displayed or are eliminated from the display screen.

When a "telop display position adjustment" button is selected, display positions of the telop display areas A1 and A2 become changeable. When the display position becomes changeable, the screen transitions to a display screen illustrated in Fig. 12B. On this display screen, the user selects a telop display area whose display position is changed by pressing the arrow button 82. In this drawing, the telop display area A1 is selected, and the frame line of the telop display area A1 is made thicker.

When the SET button 81 is pressed, the telop display area A1 is selected, and the display position of the telop display area A1 becomes changeable. When the arrow button 82 is pressed, the telop display area A1 moves in the direction of the arrow.

Moreover, when the SET button 81 is pressed for several seconds, for example, the display screen transitions to a display screen illustrated in Fig. 12C. As shown in this display screen, a second menu window W2 is displayed on the display screen.

Furthermore, when the SET button 81 is pressed for several seconds, for example, in a state where the telop display area for changing the display position is selected on the display screen illustrated in Fig. 12 B, the display screen transitions to a display screen illustrated in Fig. 12D. As shown in this display screen, a new telop display area A3 is displayed.

Since the operation unit 10 includes the physical button 8, the user can accurately adjust the display positions of the telop display areas A1 to A3. For example, when the arrow button 82 is pressed once, the telop display areas A1 to A3 can be moved by one pixel.

### [3. Third embodiment of present technology (Example 3 of imaging apparatus)]

The size of a display screen included in an imaging apparatus 100 is often different depending on the imaging apparatus 100. The size includes the resolution or the like of the display screen in addition to the vertical and horizontal lengths of the display screen. Therefore, when the display position of a telop display area is set by, for example, coordinates, the display position or size of the telop display area may be different depending on the imaging apparatus 100.

Against this background, a display control unit 5 can change the display position and/or size of the telop display area according to the size of the display screen included in the imaging apparatus 100.

In the block diagram shown in Fig. 1, a telop display area setting unit 2 and a memory 3 store information regarding a telop display area in a general-purpose format. A control unit 6 normalizes the display position and/or size of the telop display area according to the size of the display screen by comparing the information regarding the size of the display screen with information regarding the telop display area. Then, the control unit 6 instructs the display control unit 5 to perform display control. Then, the display control unit 5 performs display control such that the telop display area is superimposed on the captured image.

As a result, the telop display area is displayed without being affected by the size of the display screen included in the imaging apparatus 100.

### [4. Fourth embodiment of present technology (Example 4 of imaging apparatus)]

For example, the display position or size of a telop display area often has a predetermined arrangement pattern depending on the attribute of the product. The attribute includes a provision form of the product. Examples of the provision form include television broadcasting, Internet distribution, movie showing, and the like.

Alternatively, the attribute includes a broadcast form of the product. Examples of the broadcast form include live broadcast and recorded broadcast.

Alternatively, the attribute includes the type or name of the program that is a production. Examples of types of programs include a news program, an information program, a sports program, a cultural program, an entertainment program, a drama, a movie program, and the like. Further, the attribute may include a name of a segment in a program.

In addition, the attribute includes the type of event. Examples of types of events include a wedding, a class, an assembly, and sports. Here, for example, types of sports such as soccer, baseball, and basket are also included in the types of events.

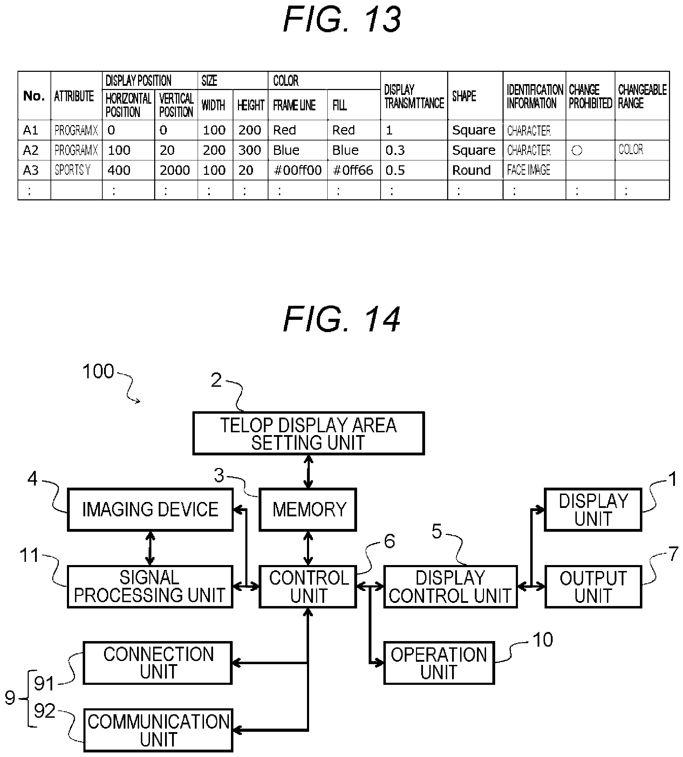

These attributes are included in information regarding a telop display area. Information regarding a telop display area will be described with reference to Fig. 13. Fig. 13 is an example of a table retaining information regarding a telop display area according to an embodiment of the present technology. This table may be recorded in, for example, an extensible markup language (XML) format or the like. This table can be recorded together with image data.

As illustrated in Fig. 13, information regarding a telop display area can include an attribute of a product. The display position, size, or the like of the telop display area is set according to this attribute. Information regarding a plurality of telop display areas may be set corresponding to one attribute.

As described above, a telop display area setting unit 2 sets an attribute of a product for which an imaging apparatus 100 is used. Since the display position or size of the telop display area is set according to the attribute, the arrangement pattern of the telop display area can be switched according to the attribute. This switching can be performed, for example, via a physical button 8 or the like illustrated in Fig. 11. As a result, since the user can easily switch the arrangement pattern of the telop display area according to the attribute, the imaging apparatus 100 becomes more useful.

### [5. Fifth embodiment of present technology (Example 5 of imaging apparatus)]

An imaging apparatus according to an embodiment of the present technology can share data regarding a telop display area with another electronic device. This will be described with reference to Fig. 14. Fig. 14 is a block diagram illustrating a configuration of an imaging apparatus 100 according to the embodiment of the present technology. As illustrated in Fig. 14, the imaging apparatus 100 can further include an input/output unit 9 that inputs and outputs data.

The input/output unit 9 can include, for example, a connection unit 91 connected to an external nonvolatile memory, and a communication unit 92 that communicates with an information communication network. Note that the input/output unit 9 may be configured to include only one of the connection unit 91 and the communication unit 92.

The nonvolatile memory to which the connection unit 91 is connected includes, for example, an SD memory card, a memory stick (registered trademark), a USB flash drive, a hard disk drive, a solid state drive, or the like.

The communication unit 92 can use a communication technology such as Wi-Fi, Bluetooth (registered trademark), or long term evolution (LTE).

As a result, information regarding a telop display area can be shared among a plurality of electronic devices. For example, when a plurality of imaging apparatuses 100 is used to produce one product, the plurality of imaging apparatuses 100 can share information regarding the same telop display area. As a result, a uniform telop display area is set for each of the plurality of imaging apparatuses 100.

Note that when the imaging apparatus 100 is used for business use, reliability is required for the captured data. Therefore, it is preferable to use a more reliable nonvolatile memory than an information communication network in which communication may be unstable.

Note, however, that it is preferable to use an information communication network when the distance from the other electronic device is long or when quick work is required. For example, in a case where news flash is received when the imaging apparatus 100 is used at a certain imaging site, information regarding a telop display area can be transmitted from a computer device included in a broadcasting station to the imaging apparatus 100 via an information communication network.

### [6. Sixth embodiment of present technology (imaging system)]

An imaging system according to an embodiment of the present technology is implemented by connecting a computer device and an imaging apparatus via an information communication network. As a result, for example, information regarding a telop display area set in the computer device can be shared with the imaging apparatus via the information communication network. As a result, for example, the effects described in the fifth embodiment are produced.

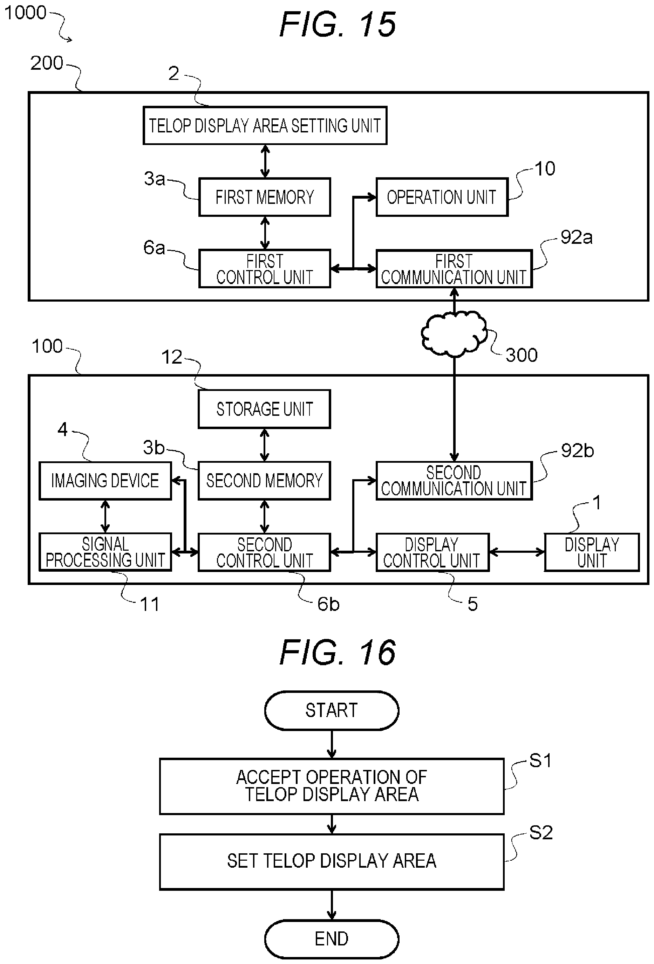

The imaging system according to the embodiment of the present technology will be described with reference to Fig. 15. Fig. 15 is a block diagram illustrating a configuration of an imaging system 1000 according to the embodiment of the present technology. Note that the imaging system 1000 according to the present embodiment can use the technology according to the other embodiments described above. Accordingly, components having functions similar to those of the other embodiments are denoted by similar names and reference numerals, and detailed description thereof will be omitted.

As illustrated in Fig. 15, a computer device 200 and an imaging apparatus 100 are connected via an information communication network 300. The information communication network 300 can be implemented by, for example, a wired network such as a local area network (LAN) or a wide area network (WAN), a wireless network such as a wireless wide area network (WWAN) via a wireless local area network (WLAN) or a base station, the Internet using a communication protocol such as transmission control protocol/Internet protocol (TCP/IP), or the like.

The computer device 200 may be, for example, a smartphone terminal, a tablet terminal, a mobile phone terminal, a personal digital assistant (PDA), a personal computer (PC), a server, a portable music player, a portable game machine, a wearable terminal (HMD: head mounted display, glasses-type HMD, watch-type terminal, band-type terminal, and the like), or the like.

The computer device 200 can include, for example, an operation unit 10, a telop display area setting unit 2, a first memory 3a, a first communication unit 92a, a first control unit 6a, and the like as components. The components are connected by, for example, a bus as a data transmission path.

The operation unit 1 can be implemented by having, for example, a touch panel or the like. The operation unit 1 accepts an operation of a telop display area by the user.

The telop display area setting unit 2 can be implemented by using, for example, a nonvolatile memory. The telop display area setting unit 2 sets a telop display area.

The first memory 3a can be implemented by using, for example, a random access memory (RAM) or the like. The first memory 3a temporarily stores, for example, information regarding a telop display area.

The first communication unit 92a has a function of communicating data with the imaging apparatus 100 via the information communication network 300.

The first control unit 6a can be implemented by using, for example, a central processing unit (CPU) or the like. The first control unit 6a controls processing of components such as the telop display area setting unit 2.

The imaging apparatus 100 can include, for example, an imaging device 4, a display control unit 5, a display unit 1, a storage unit 12, a second memory 3b, a second communication unit 92b, a second control unit 6b, and the like.

The imaging device 4 can be implemented by using, for example, an image sensor or the like. The imaging device 4 obtains image data.

The signal processing unit 11 includes units for performing various types of signal processing on the digital signal (captured image signal) transmitted from the imaging device 4.

The display control unit 5 can be implemented by using, for example, a circuit, a program, or the like having an on-screen display (OSD) function. The display control unit 5 performs display control such that a telop display area set by the telop display area setting unit 2 included in the computer device 200 is superimposed on a captured image included in image data obtained by the imaging device 4.

The display unit 1 can be implemented by having a display screen such as a display, for example. The display unit 1 can display a captured image and the like.

The storage unit 12 can be implemented by using, for example, a nonvolatile memory or the like. The storage unit 12 can store image data and the like.

The second memory 3b can be implemented by using, for example, a random access memory (RAM) or the like. The second memory 3b temporarily stores, for example, information regarding a telop display area.

The second communication unit 92b has a function of communicating data with the computer device 200 via the information communication network 300.

The second control unit 6b can be implemented by using, for example, a central processing unit (CPU) or the like. The second control unit 6b controls processing of components such as the display control unit 5. For example, the control unit 6 instructs the display control unit 5 to perform display control on the basis of information regarding a telop display area stored in the second memory 3b.

The number of the computer devices 200 may be one or more. Similarly, the number of imaging apparatuses 100 may be one or more. Furthermore, there may be a computer device 200 or an imaging apparatus 100 that is not connected to the information communication network 300.

The computer device 200 can have some or all of the functions of the imaging apparatus 100. Similarly, the imaging apparatus 100 can have some or all of the functions of the computer device 200. For example, the imaging apparatus 100 may include the telop display area setting unit 2.

In addition to this, the configurations described in the above embodiments can be selected or changed as appropriate to other configurations without departing from the gist of the present technology.

### [7. Seventh embodiment of present technology (setting method of imaging apparatus)]

A setting method according to an embodiment of the present technology is a setting method of an imaging apparatus including setting a telop display area using the imaging apparatus. Note that the setting method according to the present embodiment can use the technology according to the other embodiments described above. Therefore, redundant description of technologies described in other embodiments will be omitted.

A setting method according to the present embodiment will be described with reference to Fig. 16. Fig. 16 is a flowchart illustrating an example of processing of the setting method according to the present embodiment.

As illustrated in Fig. 16, first, in step S1, the imaging apparatus accepts an operation of a telop display area by the user.

Next, in step S2, the imaging apparatus sets the telop display area on the basis of a user operation.

The setting method according to the present embodiment can be implemented by using software and hardware. Specifically, for example, the setting method according to the present embodiment can be implemented by a microcomputer included in an imaging apparatus that is hardware reading a program or the like for implementing the setting method according to the present embodiment.

In addition to this, the configurations described in the above embodiments can be selected or changed as appropriate to other configurations without departing from the gist of the present technology.

Note that the effect described in the present specification is merely an example and is not limited, and other effects can be obtained.

Note that the present technology can also be configured as follows.
[1] An imaging apparatus including a telop display area setting unit that sets a telop display area that is an area in which a telop is superimposed and displayed on a captured image.
[2] The imaging apparatus according to [1], in which
   the telop display area setting unit sets a display position of the telop display area.
[3] The imaging apparatus according to [1] or [2], in which
   the telop display area setting unit sets a size of the telop display area.
[4] The imaging apparatus according to any one of [1] to [3], in which
   the telop display area setting unit sets a color of the telop display area.
[5] The imaging apparatus according to any one of [1] to [4], in which
   the telop display area setting unit sets display transmittance of the telop display area.
[6] The imaging apparatus according to any one of [1] to [5], in which
   the telop display area setting unit sets a shape of the telop display area.
[7] The imaging apparatus according to any one of [1] to [6], in which
   the telop display area setting unit sets identification information for identifying the telop.
[8] The imaging apparatus according to any one of [1] to [7], in which
   the telop display area setting unit sets setting information regarding the telop display area such that a user cannot change the setting information.
[9] The imaging apparatus according to any one of [1] to [8], in which
   the telop display area setting unit sets a range changeable by a user in setting information regarding the telop display area.
[10] The imaging apparatus according to any one of [1] to [9], in which
   the telop display area setting unit sets a plurality of the telop display areas.
[11] The imaging apparatus according to any one of [1] to [10], in which
   the telop display area setting unit sets an attribute of a product for which the imaging apparatus is used.
[12] The imaging apparatus according to any one of [1] to [11], further including a display control unit, in which
   the display control unit performs display control such that the telop display area is superimposed on the captured image.
[13] The imaging apparatus according to [12], in which
   the display control unit changes a display position of the telop display area according to a size of a display screen included in the imaging apparatus.
[14] The imaging apparatus according to [12] or [13], in which
   the display control unit changes a size of the telop display area according to a size of a display screen included in the imaging apparatus.
[15] The imaging apparatus according to any one of [1] to [14], further including an operation unit that accepts an operation of a user, in which
   the telop display area setting unit sets the telop display area on the basis of operation information obtained from the operation unit.
[16] The imaging apparatus according to [15], in which
   the operation unit includes a touch panel that accepts a touch operation of the user.
[17] The imaging apparatus according to [15] or [16], in which
   the operation unit includes a physical button that accepts a button pressing operation of the user.
[18] An imaging system including a telop display area setting unit that sets a telop display area that is an area in which a telop is superimposed and displayed on a captured image.
[19] A setting method of an imaging apparatus, the method including setting a telop display area that is an area in which a telop is superimposed and displayed on a captured image.

### REFERENCE SIGNS LIST

- A1 to A3: Telop display area
- 100: Imaging apparatus
- 1: Display unit
- 2: Telop display area setting unit
- 3: Memory
- 4: Imaging device
- 5: Display control unit
- 6: Control unit
- 7: Output unit
- 8: Physical button
- 9: Input/output unit
- 91: Connection unit
- 92: Communication unit
- 10: Operation unit
- 200: Computer device
- 300: Information communication network
- 1000: Imaging system
- S2: Setting a telop display area

## Claims

1. An imaging apparatus comprising a telop display area setting unit that sets a telop display area that is an area in which a telop is superimposed and displayed on a captured image.

2. The imaging apparatus according to claim 1, wherein
the telop display area setting unit sets a display position of the telop display area.

3. The imaging apparatus according to claim 1, wherein
the telop display area setting unit sets a size of the telop display area.

4. The imaging apparatus according to claim 1, wherein
the telop display area setting unit sets a color of the telop display area.

5. The imaging apparatus according to claim 1, wherein
the telop display area setting unit sets display transmittance of the telop display area.

6. The imaging apparatus according to claim 1, wherein
the telop display area setting unit sets a shape of the telop display area.

7. The imaging apparatus according to claim 1, wherein
the telop display area setting unit sets identification information for identifying the telop.

8. The imaging apparatus according to claim 1, wherein
the telop display area setting unit sets setting information regarding the telop display area such that a user cannot change the setting information.

9. The imaging apparatus according to claim 1, wherein
the telop display area setting unit sets a range changeable by a user in setting information regarding the telop display area.

10. The imaging apparatus according to claim 1, wherein
the telop display area setting unit sets a plurality of the telop display areas.

11. The imaging apparatus according to claim 1, wherein
the telop display area setting unit sets an attribute of a product for which the imaging apparatus is used.

12. The imaging apparatus according to claim 1, further comprising a display control unit, wherein
the display control unit performs display control such that the telop display area is superimposed on the captured image.

13. The imaging apparatus according to claim 12, wherein
the display control unit changes a display position of the telop display area according to a size of a display screen included in the imaging apparatus.

14. The imaging apparatus according to claim 12, wherein
the display control unit changes a size of the telop display area according to a size of a display screen included in the imaging apparatus.

15. The imaging apparatus according to claim 1, further comprising an operation unit that accepts an operation of a user, wherein
the telop display area setting unit sets the telop display area on a basis of operation information obtained from the operation unit.

16. The imaging apparatus according to claim 15, wherein
the operation unit includes a touch panel that accepts a touch operation of the user.

17. The imaging apparatus according to claim 15, wherein
the operation unit includes a physical button that accepts a button pressing operation of the user.

18. An imaging system comprising a telop display area setting unit that sets a telop display area that is an area in which a telop is superimposed and displayed on a captured image.

19. A setting method of an imaging apparatus, the method comprising setting a telop display area that is an area in which a telop is superimposed and displayed on a captured image.
